# FASCICULE DE BREVET EUROPEEN

(11) **EP 0 470 879 B1**
(45) Date de publication et mention de la délivrance du brevet: **21.04.1993**
(21) Numéro de dépôt: 91402068.0
(22) Date de dépôt: 24.07.1991
(51) Int. Cl.: B60K 17/20, F16H 1/44, F16D 35/00

(54) **Dispositif de transmission à différentiel et accouplement notamment pour véhicule automobile**
Differentialübertragungseinrichtung und Kupplung, insbesondere für ein Kraftfahrzeug
Differential transmission device and coupling, especially for motor vehicle

(30) Priorité: 07.08.1990 FR 9010072
(43) Date de publication de la demande: 12.02.1992
(73) Titulaire: GLAENZER SPICER, F-78301 Poissy (FR)
(72) Inventeur: Guimbretiere, Pierre, F-78640 Neauphle le Château (FR)
(74) Mandataire: Moncheny, Michel

(56) Documents cités:
- EP-A- 0 371 266
- EP-A- 0 456 563
- DE-A- 1 455 879
- DE-A- 3 643 732
- FR-A- 2 044 898
- GB-A- 925 176
- GB-A- 986 817
- US-A- 4 838 119

## Description

La présente invention concerne les transmissions à différentiel utilisées notamment dans les véhicules automobiles.

Ces différentiels comprennent un organe d'entrée et deux organes de sortie montés rotatifs autour d'un même axe, les deux organes de sortie étant reliés, dans un exemple d'implantation, à des arbres latéraux de transmission à des roues motrices du véhicule. Dans une autre configuration les deux organes de sortie peuvent être reliés, respectivement, à des organes d'entrée de deux autres différentiels.

On a cherché à améliorer le fonctionnement de ces différentiels en leur associant des dispositifs de blocage ou de limitation du glissement.

Un premier type de différentiel auto-bloquant décrit dans EP-A- 0371266 comprend au moins un embrayage à friction interposé entre deux desdits organes d'entrée et de sortie, cet embrayage étant commandé par au moins un organe mobile à l'intérieur du différentiel, dont la position est fonction du couple qui transite par ce différentiel. De plus, dans ce dispositif connu, deux bagues en appui sur le porte-satellites limitent le jeu axial des planétaires en direction du centre du différentiel.

Une seconde tentative pour améliorer le fonctionnement d'un différentiel a consisté à lui associer un dispositif d'accouplement à disques et à fluide visqueux travaillant au cisaillement ("viscocoupleur"), interposé entre deux desdits organes d'entrée et de sortie du différentiel. Dans ce second cas c'est la différence de vitesse de rotation entre les deux organes entre lesquels est interposé le dispositif viscocoupleur qui détermine le taux de freinage de ce dernier.

Ces deux types de dispositif présentent des inconvénients qui résultent du fait que dans un cas la commande de l'embrayage ne prend pratiquement en compte que les couples transitant par le différentiel ainsi que le signe de la différence des vitesses entre les organes de sortie, tandis que dans le second cas est seule prise en compte la différence des vitesses entre les organes entre lesquels le dispositif viscocoupleur est interposé. Il en résulte dans les deux cas des caractéristiques immuables et donc inadaptées, de variation du couple en fonction de la différence des vitesses.

Ces inconvénients se manifestent notamment, pour le premier type de dispositif par des difficultés de braquage lors des manoeuvres de parking, ou bien encore par la création de couples transférés importants et dont le sens peut changer brutalement, entre roues ou entre essieux, alors que le sol n'autorise que des couples propulseurs ou freineurs faibles, et pour le deuxième type par une certaine inadaptation à l'usage de systèmes de freinage à antiblocage des roues (ABS).

La demande de brevet EP-A- 0456563, publiée après la date de dépôt, qui constate un état de la technique selon Art. 54(3) CBE, propose un dispositif qui permet de remédier à la plupart de ces inconvénients et qui présente une plage d'utilisation plus large que les dispositifs connus. Cette demande porte sur un dispositif comprenant un différentiel comportant un boîtier, un organe d'entrée et deux organes de sortie, ainsi qu'un dispositif d'accouplement à glissement contrôlé, disposé entre deux desdits organes d'entrée et de sortie; il est caractérisé en ce que le différentiel comporte au moins un organe mobile sous l'effet d'un couple moteur dont le déplacement est utilisé pour modifier les caractéristiques de fonctionnement du dispositif d'accouplement à glissement contrôlé.

Dans une variante de réalisation l'organe mobile est un boîtier intérieur supplémentaire coulissant axialement dans le boîtier principal et des jeux de rampes et d'ergots prévus, respectivement, sur les boîtiers principal et intérieur permettent d'obtenir le déplacement axial dudit boîtier intérieur lors d'un déplacement angulaire relatif entre les deux boîtiers. Lorsque le couple est moteur, les rampes agissent sur les ergots pour déplacer le boîtier intérieur dans un sens. Des butées sont par ailleurs prévues pour solidariser en rotation les deux boîtiers, lors d'un couple de frein moteur, sans déplacement axial du boîtier intérieur.

De telles solutions avec boîtier intérieur sont satisfaisantes car elles permettent de conserver les jeux et réglages d'engrènement d'origine. Elles sont, en contrepartie, chères et encombrantes.

L'objectif recherché ici consiste à obtenir des résultats comparables à moindre coût et moindre encombrement.

A cet effet, l'invention a pour objet un dispositif de transmission, notamment pour véhicule automobile, comprenant un différentiel comportant un boîtier, un organe d'entrée et deux organes de sortie, ainsi qu'un dispositif d'accouplement disposé entre deux desdits organes d'entrée et de sortie, un organe de sortie du différentiel avec lequel coopère le dispositif d'accouplement étant réalisé en deux parties dont l'une comporte une denture et coopère avec au moins un autre composant du différentiel, tandis que la seconde est mobile axialement sur une course déterminée, et est rendue solidaire en rotation d'un arbre de sortie, des moyens étant prévus entre ces deux parties pour autoriser un débattement angulaire limité entre elles et pour qu'un déplacement angulaire relatif entre ces deux parties sous l'effet d'un couple se traduise par un déplacement axial de ladite deuxième partie qui agit sur le dispositif d'accouplement, caractérisé en ce que la première partie de l'organe de sortie, qui comporte une denture, est fixe axialement, de sorte que les jeux de dentures habituels sont conservés, étant en appui axial contre une pièce elle-même fixe axialement.

Suivant d'autres caractéristiques préférées :
- ladite première partie est en appui contre une face du boîtier de différentiel.
- ladite première partie est en appui contre une face d'un porte-satellites faisant partie du différentiel.
- lesdits moyens comprennent des jeux de rampes inclinées par rapport à la direction de l'axe dudit organe de sortie, qui coopèrent entre elles lorsqu'un couple moteur transite par le différentiel.
- lesdits moyens comprennent de plus des jeux de rampes qui coopèrent entre elles lorsqu'un couple de freinage transite par le différentiel.
- ledit organe de sortie est un planétaire.
- la partie mobile du planétaire comprend un manchon relié par des cannelures à l'arbre de sortie.
- le dispositif d'accouplement est un embrayage à friction et la partie mobile de l'organe de sortie agit pour commander cet embrayage.
- le dispositif d'accouplement est un viscocoupleur et la partie mobile de l'organe de sortie agit pour modifier les caractéristiques de fonctionnement de ce viscocoupleur.

L'invention va être décrite plus en détail ci-dessous en se référant aux dessins annexés donnés uniquement à titre d'exemple et sur lesquels :
La Fig. 1 est une vue partielle en coupe longitudiale d'un dispositif de transmission suivant l'invention;
La Fig. 2 est une vue en coupe suivant la ligne 2-2 de la Fig. 1;
La Fig. 3 est une vue partielle en coupe longitudinale d'une variante de réalisation;
Les Fig. 4^{A} et 4^{B} représentent deux vues en coupe suivant la ligne 4-4 de la Fig. 3 suivant deux variantes de réalisation;
La Fig. 5 est une vue en coupe partielle d'une autre variante;
La Fig. 6 est une vue en coupe longitudinale d'un autre mode de réalisation de l'invention appliqué à un différentiel à train épicycloïdal; et
La Fig. 7 est un diagramme illustrant le fonctionnement d'un dispositif suivant l'invention.

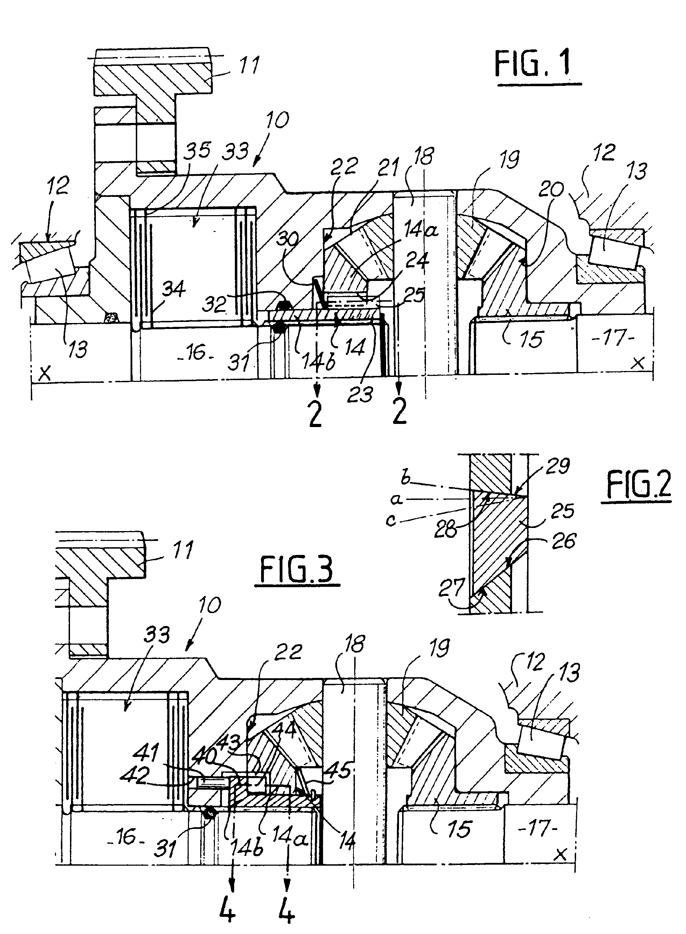

On voit sur la Fig. 1 un différentiel comprenant un boîtier 10 solidaire d'une couronne 11 et constituant l'organe d'entrée de ce différentiel, ce boîtier étant monté rotatif par rapport à un bâti 12, au moyen de paliers 13 d'axe X-X. Dans ce boîtier sont montés rotatifs autour du même axe X-X deux planétaires 14, 15 qui constituent les organes de sortie du différentiel et qui sont reliés respectivement à des arbres 16 et 17. De plus le boîtier porte au moins un axe 18 porte-satellites sur lequel sont disposés des satellites 19 engrenant avec les planétaires 14, 15.

Le planétaire 15 s'appuie latéralement de façon classique contre une face 20 du boîtier du différentiel.

Suivant l'invention, le planétaire 14 est réalisé en deux parties 14^{a}, 14^{b}. La première partie 14^{a} comporte des dentures 21 en prise avec les dentures des satellites 19, et est en appui latéralement contre une face 22 du boîtier. La deuxième partie 14^{b} est rendue solidaire de l'arbre 16 au moyen de cannelures 23 et elle est montée de façon à pouvoir coulisser suivant la direction de l'axe X-X. Les deux parties 14^{a}, 14^{b} du planétaire comportent respectivement des jeux d'encoches 24 et dents 25 de préférence régulièrement répartis autour de la périphérie du manchon 14^{b} qui délimitent des rampes 26, 27 qui coopèrent pour provoquer un déplacement axial du manchon 14^{b} lorsqu'un couple transite par le différentiel. L'orientation et la pente de ces rampes sont choisies de telle façon que le manchon 14^{b} soit déplacé vers la gauche en regardant le dessin lorsqu'un couple moteur transite par le différentiel.

Lorsque le couple qui transite par le différentiel correspond à un freinage moteur, ce sont des rampes ou des butées 28, 29 qui interviennent pour transmettre ce couple et selon l'orientation de ces rampes ou butées, différentes caractéristiques de fonctionnement peuvent être obtenues. C'est ainsi que l'on a représenté sur la Fig. 2 trois orientations possibles désignées respectivement a, b et c.

Un ressort constitué par une rondelle Belleville 30 est interposé entre le boîtier du différentiel et le manchon mobile 14^{b}, et rappelle ce manchon vers la droite en considérant la Fig. 1.

Des garnitures d'étanchéité 31, 32 sont de plus prévues entre ce manchon d'une part et le boîtier et l'arbre 16 d'autre part.

Un dispositif d'accouplement à glissement contrôlé ou viscocoupleur 33 est logé à l'intérieur du boîtier 10, du côté du planétaire 14. Ce dispositif d'accouplement est du type comprenant deux séries de disques alternés, une première série 34 étant rendue solidaire en rotation par des cannelures de l'arbre de sortie 16 associé au planétaire 14, tandis que l'autre série 35 de disques est rendue solidaire en rotation au moyen de cannelures, du boîtier de différentiel. Ces disques baignent dans un fluide visqueux travaillant au cisaillement, qui peut être par exemple une huile silicone. L'enceinte contenant ce fluide est en partie délimitée par l'extrémité du manchon 14^{b}.

Le fonctionnement d'un tel dispositif est le suivant :

En l'absence de couple moteur, le dispositif d'accouplement 33 est seulement piloté ou commandé par la différence des vitesses de rotation entre le boîtier 10 et l'arbre de sortie 16 associé au planétaire 14. La caractérisque Cv = f (Δ n) étant choisie assez faible (où Cv est le couple résistant dû au viscocoupleur et Δ n la différence des vitesses de rotation entre le boîtier et l'arbre 16), un tel différentiel oppose peu de réluctance aux manoeuvres à très faible vitesse.

Dès qu'un couple moteur efficace est transmis aux roues, des efforts s'exercent au niveau des rampes 26 et 27, provoquant ainsi un déplacement du manchon 14^{b} vers la gauche. Ce déplacement a pour effet de diminuer le volume offert au fluide visqueux dans l'enceinte délimitée par le boîtier 10, l'arbre 16 et l'extrémité du manchon 14^{b}. Il résulte de cette diminution du volume de l'enceinte, une augmentation de la pression interne du fluide et par conséquent une modification de la loi caractéristique Cv = f (Δ n), ce qui rend le viscocoupleur plus efficace dans les situations que l'on rencontre lorsqu'un couple moteur est transmis aux roues.

Lorsque le couple s'inverse et devient couple de freinage, ce sont les faces 28, 29 qui entrent en contact. Si ces faces sont parallèles à l'axe de rotation des planétaires (solution a sur la Fig. 2), le manchon n'est pas sollicité à se déplacer axialement, sauf bien entendu par le ressort 30. Les deux autres profils b et c représentés à la Fig. 2 procurent par contre une légère tendance au déplacement du manchon, dans un sens ou dans l'autre, qui peut être souhaitable dans certains cas.

On retrouve sur la Fig. 3 un certain nombre d'éléments analogues à ceux de la Fig. 1 et qui sont désignés par les mêmes numéros de référence. Dans cette variante de réalisation, la partie mobile 14^{b} du planétaire comporte une collerette radiale 40 qui est en appui sur au moins une navette 41 reçue dans un perçage 42 du boîtier, qui débouche dans l'enceinte du viscocoupleur.

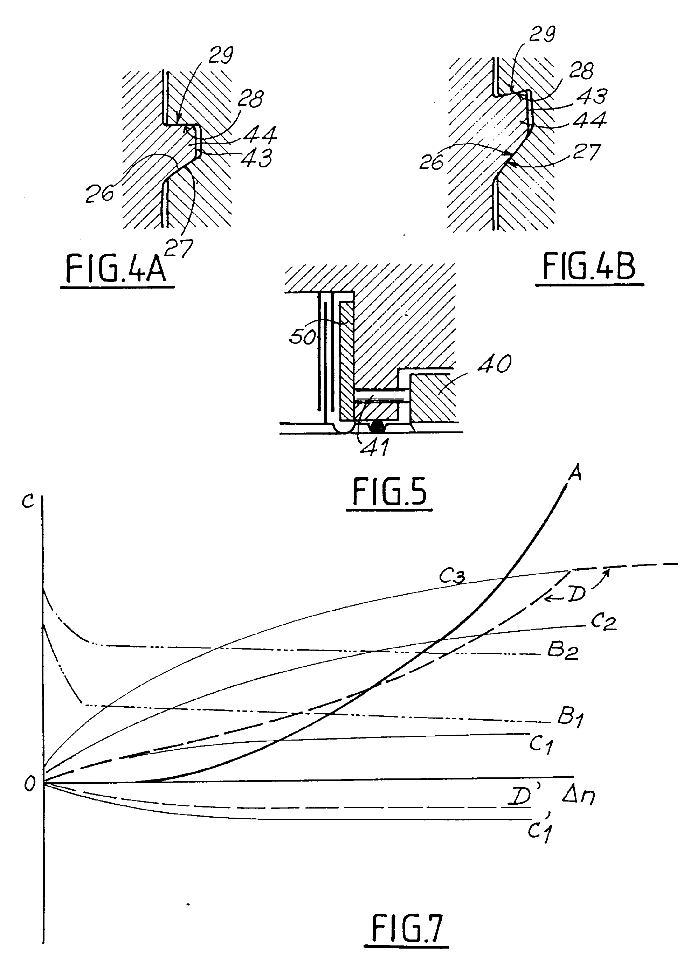

Par ailleurs, les moyens de liaison entre les deux parties du planétaire sont ici constitués par des encoches 43 et des crabots latéraux 44 délimitant, comme dans l'exemple précédent, des rampes 26, 27 et 28, 29. Ces rampes sont représentées suivant deux variantes aux Fig. 4^{A} et 4^{B}. Un organe de rappel élastique constitué par une rondelle Belleville 45 est ici disposé entre les deux pièces qui constituent le planétaire et non plus entre le boîtier de différentiel et la partie mobile de ce planétaire.

Le fonctionnement de ce dispositif est tout-à-fait comparable à celui décrit précédemment, à cette différence près que c'est le déplacement de la ou de chaque navette qui provoque une variation de volume et donc de pression interne du viscocoupleur.

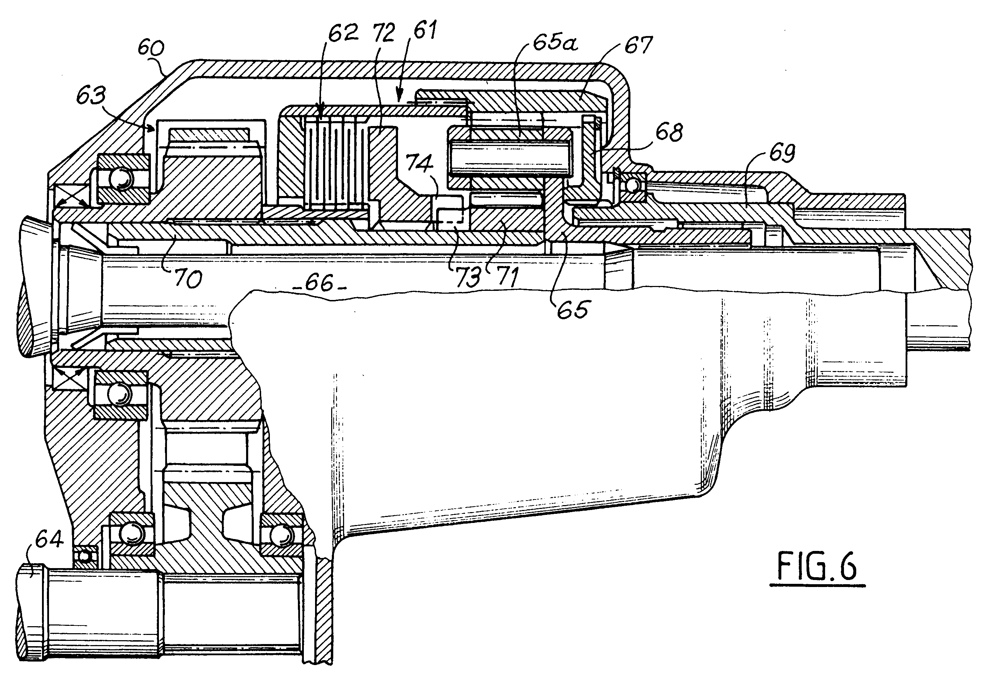

Suivant une autre variante de détail (Fig. 5), les navettes 41 peuvent venir en appui sur un plateau mobile 50 incorporé au viscocoupleur et susceptible de modifier l'écartement entre les disques de ce dernier.

On a représenté à la Fig. 6 un mode de réalisation dans lequel l'invention est appliquée à un différentiel interponts du type à train épicycloïdal. Le dispositif comprend un boîtier 60 dans lequel sont disposés le différentiel 61, un embrayage à disques 62 et un mécanisme de transmission à courroie crantée 63 assurant le renvoi vers un arbre de transmission 64 relié à un pont avant.

Le différentiel comprend un porte-satellites 65 qui est relié à l'arbre d'entrée 66, une couronne 67 solidaire en rotation d'un flasque 68 et d'un arbre de sortie 69 qui constitue un arbre de transmission vers un pont arrière, et un planétaire relié à un deuxième arbre de sortie 70 coaxial à l'arbre d'entrée et qui est destiné à entraîner l'arbre 64 de transmission vers le pont avant.

Selon l'invention, le planétaire est réalisé en deux parties, une première partie 71 montée libre en rotation sur l'arbre 70 et qui est en prise avec des pignons satellites 65a, et une deuxième partie 72 qui est solidaire en rotation par des cannelures de l'arbre de sortie 70 et qui constitue un plateau de poussée pouvant agir sur l'embrayage 62. Des moyens de liaison à rampes 73, 74 analogues à ceux décrits à propos de la Fig. 3 sont prévue entre les deux parties 71 et 72 du planétaire.

Le fonctionnement d'un tel dispositif est analogue à celui décrit précédemment, à cela près que la partie mobile 72 du planétaire agit simplement pour commander ou piloter un embrayage à disques et non pour modifier la caractéristique de fonctionnement d'un accouplement à fluide visqueux.

On retrouve toutefois dans cette réalisation comme dans les précédentes le fait que c'est le couple transitant par le différentiel qui provoque de façon simple et fiable une action sur un accouplement associé au différentiel. Les moyens mis en jeu sont en effet particulièrement peu encombrants et peu coûteux puisqu'il suffit dans tous les cas de réaliser en deux parties un organe de sortie du différentiel et de prévoir entre ces deux parties des rampes ayant pour effet de déplacer axialement sur une course déterminée la partie mobile dudit organe de sortie. Une telle solution est particulièrement séduisante en ce qu'elle permet de ne pas modifier les conditions d'engrènement de l'organe de sortie considéré, puisque la partie de cet organe qui coopère avec les autres composants du différentiel est fixe axialement, de sorte que les jeux de dentures habituels sont conservés, ce qui garantit un fonctionnement fiable et silencieux.

Le fonctionnement d'un dispositif suivant l'invention est illustré sur la Fig. 7 où l'on a représenté sur un diagramme C/ Δ n les caractéristiques de solutions connues, de la solution selon l'invention et d'une solution "idéale" désignée par la référence A. Les courbes B1 et B2 correspondent à des solutions du type à embrayage à friction pour deux tarages de valeurs différentes. Les courbes C1, C2, C3 illustrent trois caractéristiques de dispositifs connus à viscocoupleur. La courbe D correspond à la mise en oeuvre de l'invention appliquée à la commande d'un viscocoupleur, et l'on peut constater que l'on passe progressivement, sous couple moteur, de la caractéristique de base C1 à la caractéristique extrême C3, la partie terminale de la courbe D correspondant à l'entrée en action de butées limitant le déplacement axial du manchon mobile.

La partie inférieure du diagramme illustre ce qui se passe lors d'un fonctionnement en frein moteur. Si les rampes qui interviennent dans cette situation de fonctionnement sont parallèles à l'axe X-X, on retrouve une caractéristique C'1 symétrique de la caractéristique C1. On peut même obtenir une caractéristique D' plus faible que C'1, si les rampes présentent un profil en contre-dépouille, comme représenté sur les Fig. 2 et 4^{B}.

Il est à noter également que dans l'application à un dispositif comportant un viscocoupleur, l'invention autorise le phénomène de blocage du viscocoupleur sous l'effet d'une augmentation de pression résultant elle-même d'une augmentation de température, ce phénomène étant bien souvent recherché afin de réaliser des démarrages dans des conditions limites extrêmes de faible adhérence.

## Revendications

1. Dispositif de transmission, notamment pour véhicule automobile, comprenant un différentiel comportant un boîtier (10; 60), un organe d'entrée et deux organes de sortie, ainsi qu'un dispositif d'accouplement (33; 62) disposé entre deux desdits organes d'entrée et de sortie, un organe de sortie du différentiel avec lequel coopère le dispositif d'accouplement étant réalisé en deux parties (14^{a}, 14^{b}; 71, 72) dont l'une (14^{a}; 71) comporte une denture et coopère avec au moins un autre composant du différentiel, tandis que la seconde (14^{b}; 72) est mobile axialement sur une course déterminée, et est rendue solidaire en rotation d'un arbre de sortie (16; 70), des moyens (24, 25; 43, 44; 73, 74) étant prévus entre ces deux parties pour autoriser un débattement angulaire limité entre elles et pour qu'un déplacement angulaire relatif entre ces deux parties sous l'effet d'un couple se traduise par un déplacement axial de ladite deuxième partie qui agit sur le dispositif d'accouplement, caractérisé en ce que la première partie (14^{a}; 71) de l'organe de sortie 14, qui comporte une denture, est fixe axialement, de sorte que les jeux de dentures habituels sont conservés, étant en appui axial contre une pièce (22; 65) elle-même fixe axialement.

2. Dispositif selon la revendication 1, caractérisé en ce que ladite première partie (14^{a}) est en appui contre une face (22) du boîtier de différentiel.

3. Dispositif selon la revendication 1, caractérisé en ce que ladite première partie (71) est en appui contre une face (22) d'un porte-satellites (65) faisant partie du différentiel.

4. Dispositif selon la revendication 1, caractérisé en ce que lesdits moyens comprennent des jeux de rampes (26, 27) inclinées par rapport à la direction de l'axe (X-X) dudit organe de sortie, qui coopèrent entre elles lorsqu'un couple moteur transite par le différentiel.

5. Dispositif selon la revendication 4, caractérisé en ce que lesdits moyens comprennent de plus des jeux de rampes (28, 29) qui coopèrent entre elles lorsqu'un couple de freinage transite par le différentiel.

6. Dispositif selon la revendication 5, caractérisé en ce que lesdites rampes (28, 29) sont orientées parallèlement à l'axe (X-X) dudit organe de sortie.

7. Dispositif selon la revendication 5, caractérisé en ce que lesdites rampes (28, 29) sont inclinées par rapport à la direction de l'axe (X-X) dudit organe de sortie.

8. Dispositif selon l'une quelconque des revendications 1 à 7, caractérisé en ce que ledit organe de sortie est un planétaire.

9. Dispositif selon la revendication 8, caractérisé en ce que la partie mobile du planétaire comprend un manchon (14^{b}) relié par des cannelures à l'arbre de sortie (16; 70).

10. Dispositif selon la revendication 9, caractérisé en ce que le manchon (14^{b}) s'étend concentriquement à l'intérieur de la partie (14^{a}) fixe axialement de ce même planétaire.

11. Dispositif selon la revendication 9, caractérisé en ce que le manchon (14b) comporte une collerette radiale (40) en appui contre au moins une navette (41) coulissant axialement dans un alésage (42) du boîtier.

12. Dispositif selon la revendication 9, caractérisé en ce que le manchon comporte un plateau de pression (72) coopérant avec le dispositif d'accouplement (62).

13. Dispositif selon l'une quelconque des revendications 1 à 12, caractérisé en ce qu'un ressort de rappel (30) est interposé entre le boîtier (10) et la partie mobile (14^{b}) de l'organe de sortie.

14. Dispositif selon l'une quelconque des revendications 1 à 12, caractérisé en ce qu'un ressort de rappel (45) est interposé entre les deux parties (14^{a}, 14^{b}) de l'organe de sortie.

15. Dispositif selon l'une quelconque des revendications 1 à 14, caractérisé en ce que le dispositif d'accouplement est un embrayage à friction (62) et la partie mobile de l'organe de sortie agit pour commander cet embrayage.

16. Dispositif selon l'une quelconque des revendications 1 à 14, caractérisé en ce que le dispositif d'accouplement est un viscocoupleur et la partie mobile de l'organe de sortie agit pour modifier les caractéristiques de fonctionnement de ce viscocoupleur.

17. Dispositif selon l'une quelconque des revendications 15 et 16, caractérisé en ce que le dispositif d'accouplement comporte deux séries de disques alternés, coopérant, respectivement avec deux pièces distinctes de la partie mobile de l'organe de sortie.

## Patentansprüche

1. Getriebevorrichtung, insbesondere für Kraftfahrzeuge, mit einem Differential, umfassend ein Gehäuse (10;60), ein Eingangsorgan und zwei Ausgangsorgane sowie eine zwischen den beiden besagten Ein- und Ausgangsorganen angeordnete Kupplungsvorrichtung (33;62), ein Ausgangsorgan des Differentials, mit welchem die Kupplungsvorrichtung mittels zweier Teile (14a,14b,71,72) zusammenwirkt, wovon das eine Teil (14a; 71) eine Verzahnung aufweist und mit zumindest einem weiteren Bauteil des Differentials zusammenwirkt, während das zweite Teil (14b; 72) auf einem festgelegten Hub axial beweglich ist und drehfest mit einer Antriebswelle (16;70) verbunden ist, Mittel (24,25;43,44;73,74), die zwischen diesen beiden Teilen vorgesehen sind, um einen begrenzten winkelförmigen Ausschlag zwischen diesen zu gestatten, und damit eine entsprechende winkelförmige Verschiebung zwischen diesen beiden Teilen unter Einwirkung eines Drehmoments in eine Axialverschiebung des besagten zweiten Teils zu übertragen, das auf die Kupplungsvorrichtung einwirkt,
dadurch gekennzeichnet,
daß das erste Teil (14a;71) des Ausgangsorgans 14, das eine Verzahnung umfaßt, axial fest angeordnet ist, so daß die üblichen Verzahnungsspiele erhalten bleiben und axial gegen ein Teil (22;65) in Anlage ist, das selbst axial fest angeordnet ist.

2. Vorrichtung gemäß Anspruch 1,
dadurch gekennzeichnet,
daß das besagte erste Teil (14a) in Anlage zu einer Fläche (22) des Differentialgehäuses angeordnet ist.

3. Vorrichtung gemäß Anspruch 1,
dadurch gekennzeichnet,
daß das besagte erste Teil (71) in Anlage zu einer Fläche (22) eine Satellitenträgers (65), welcher einen Teil des Differentiales bildet, ist.

4. Vorrichtung gemäß Anspruch 1,
dadurch gekennzeichnet,
daß die besagten Mittel Rampensätze (28,27) aufweisen, welche im Verhältnis zur Richtung der Achse (X-X) des besagten Ausgangsorgans geneigt angeordnet sind und die untereinander zusammenwirken, wenn ein Motormoment durch das Differential übertragen wird.

5. Vorrichtung gemäß Anspruch 4,
dadurch gekennzeichnet,
daß die besagten Mittel mehrere Rampensätze (28,29) umfassen, welche untereinander zusammenwirken, wenn ein Bremsmoment durch das Differential übertragen wird.

6. Vorrichtung gemäß Anspruch 5,
dadurch gekennzeichnet,
daß die besagten Rampen (28,29) parallel zur Achse (X-X) des besagten Ausgangsorgans ausgerichtet sind.

7. Vorrichtung gemäß Anspruch 5,
dadurch gekennzeichnet,
daß die besagten Rampen (28,29) im Verhältnis zur Richtung der Achse (X-X) des besagten Ausgangsorgans geneigt angeordnet sind.

8. Vorrichtung gemäß einem der Ansprüche 1 bis 7,
dadurch gekennzeichnet,
daß das besagte Ausgangsorgan ein Zentralrad ist.

9. Vorrichtung gemäß Anspruch 8,
dadurch gekennzeichnet,
daß der bewegliche Teil des Zentralrades eine Muffe (14b) aufweist, welche durch Keilverzahnung mit der Abtriebswelle (15;70) verbunden ist.

10. Vorrichtung gemäß Anspruch 9,
dadurch gekennzeichnet,
daß die Muffe (14b) sich konzentrisch in das Innere des axial festen Teils (14a) des besagten Zentralrades erstreckt.

11. Vorrichtung gemäß Anspruch 9,
dadurch gekennzeichnet,
daß die Muffe (14b) einen Radialkragen (40) umfaßt, der gegen zumindest einen Versteller (41) anliegt, welcher in einer Bohrung (42) des Gehäuses axial gleitet.

12. Vorrichtung gemäß Anspruch 9,
dadurch gekennzeichnet,
daß die Muffe eine Druckplatte (72) umfaßt, die mit der Kupplungsvorrichtung (62) zusammenwirkt.

13. Vorrichtung gemäß einem der Ansprüche 1 bis 12,
dadurch gekennzeichnet,
daß eine Rückstellfeder (30) zwischen dem Gehäuse (10) und dem beweglichen Teil (14b) des Ausgangsorgans eingefügt ist.

14. Vorrichtung gemäß einem der Ansprüche 1 bis 12,
dadurch gekennzeichnet,
daß eine Rückstellfeder (45) zwischen den beiden Teilen (14a,14b) des Ausgangsorgans eingefügt ist.

15. Vorrichtung gemäß einem der Ansprüche 1 bis 14,
dadurch gekennzeichnet,
daß die Kupplungsvorrichtung eine Reibungskupplung (62) ist, und das bewegliche Teil des Ausgangsorgans die Steuerung der Kupplung bewirkt.

16. Vorrichtung gemäß einem der Ansprüche 1 bis 14,
dadurch gekennzeichnet,
daß die Kupplungsvorrichtung eine Viskokupplung ist, und der bewegliche Teil des Ausgangsorgans eine Änderung der Funktionseigenschaften dieser Viskokupplung bewirkt.

17. Vorrichtung gemäß einer der Ansprüche 15 und 16,
dadurch gekennzeichnet,
daß die Kupplungsvorrichtung zwei Gruppen von alternierend angeordneten Lamellen umfaßt, welche jeweils mit zwei verschiedenen Teilen des beweglichen Teils des Ausgangsorgans zusammenwirken.

## Claims

1. Transmission device, particularly for motor vehicles, comprising a differential consisting of a housing (10; 60), one input element and two output elements, and a coupling device (33; 62) disposed between two of the said input and output elements, an output element of the differential with which the coupling device co-operates being made in two parts (14a, 14b; 71, 72), one of which (14a; 71) has teeth and co-operates with at least one other component of the differential, while the second (14b; 72) is axially mobile over a predetermined distance, and is fixed in rotation with an output shaft (16; 70), means (24, 25; 43, 44; 73, 74) being provided between these two parts to allow a limited angular clearance between them and so that a relative angular displacement between these two parts under the effect of a torque is reflected in an axial displacement of the said second part which acts on the coupling device, characterised in that the first part (14a; 71) of the output element 14, which has teeth, is fixed axially in such a way that the usual sets of teeth are retained and bears axially against a component (22; 65) which is itself fixed axially.

2. Device as claimed in claim 1, characterised in that the said first part (14a) bears against one face (22) of the differential housing.

3. Device as claimed in claim 1, characterised in that the said first part (71) bears against one face (22) of a pinion-holder (65) forming part of the differential.

4. Device as claimed in claim 1, characterised in that the said means comprise sets or ramps (26, 27) inclined with respect to the direction of the (X-X) axis of the said output element, which co-operate with each other when an engine torque passes in transit through the differential.

5. Device as claimed in claim 4, characterised in that the said means comprise in addition sets of ramps (28, 29) which co-operate with each other when a braking torque passes in transit through the differential.

6. Device as claimed in claim 5, characterised in that the said ramps (28, 29) are oriented parallel to the (X-X) axis of the said output element.

7. Device as claimed in claim 5, characterised in that the said ramps (28, 29) are inclined with respect to the direction of the (X-X) axis of the said output element.

8. Device as claimed in any one of claims 1 to 7, characterised in that the said output element is a side gear.

9. Device as claimed in claim 8, characterised in that the mobile part of the side gear incorporates a sleeve (14b) connected by splines to the output shaft (16; 70).

10. Device as claimed in claim 9, characterised in that the sleeve (14b) extends concentrically inside the axially fixed part (14a) of this same side gear.

11. Device as claimed in claim 9, characterised in that the sleeve (14b) includes a radial flange (40) which bears against at least one shuttle (41) sliding axially in a bore (42) in the housing.

12. Device as claimed in claim 9, characterised in that the sleeve incorporates a pressure plate (72) co-operating with the coupling device (62).

13. Device as claimed in any one of claims 1 to 12, characterised in that a return spring (30) is interposed between the housing (10) and the mobile part (14b) of the output element.

14. Device as claimed in any one of claims 1 to 12, characterised in that a return spring (45) is interposed between the two parts (14a, 14b) of the output element.

15. Device as claimed in any one of claims 1 to 14, characterised in that the coupling device is a friction clutch (62) and the mobile part of the output element acts in such a way as to control this clutch.

16. Device as claimed in any one of claims 1 to 14, characterised in that the coupling device is a viscocoupler and the mobile part of the output element acts in such a way as to alter the operational characteristics of this viscocoupler.

17. Device as claimed in any one of claims 15 and 16, characterised in that the coupling device comprises two alternating series of discs co-operating respectively with two distinct components of the mobile part of the output element.
